# EUROPÄISCHE PATENTSCHRIFT

(11) **EP 1 647 100 B1**
(45) Veröffentlichungstag und Bekanntmachung des Hinweises auf die Patenterteilung: **18.07.2007**
(21) Anmeldenummer: 03818261.4
(22) Anmeldetag: 23.07.2003
(51) Int. Cl.: H04B 5/00, B60C 23/04

(54) **VORRICHTUNG UND VERFAHREN ZUM ÜBERTRAGEN VON ENERGIE UND INFORMATIONEN ZWISCHEN EINER QUELLE UND EINEM RELATIV DAZU BEWEGLICHEN EMPFÄNGER**
DEVICE AND METHOD FOR THE TRANSMISSION OF ENERGY AND DATA BETWEEN A SOURCE AND A RECEIVER THAT IS MOVABLE RELATIVE THERETO
DISPOSITIF ET PROCEDE POUR TRANSMETTRE DE L'ENERGIE ET DES INFORMATIONS ENTRE UNE SOURCE ET UN RECEPTEUR MOBILE PAR RAPPORT A LA SOURCE

(43) Veröffentlichungstag der Anmeldung: 19.04.2006
(73) Patentinhaber: Fraunhofer-Gesellschaft zur Förderung der angewandten Forschung e.V., 80686 München (DE)
(72) Erfinder: BENNERTZ, Bernhard, 47807 Krefeld (DE)
(74) Vertreter: Schoppe, Fritz
(86) Internationale Anmeldenummer: PCT/EP2003/008071
(87) Internationale Veröffentlichungsnummer: WO 2005/020460

(56) Entgegenhaltungen:
- EP-A- 0 341 226
- DE-A- 10 142 273
- DE-A- 19 802 773
- DE-C- 958 600
- US-B2- 6 591 671

## Beschreibung

Die vorliegende Erfindung bezieht sich auf Übertragung von Energie und Informationen von einer Quelle zu einem relativ dazu beweglichen Empfänger und umgekehrt.

Zur Energieversorgung eines in einem beweglichen System angeordneten Verbrauchers kann beispielsweise eine Batterie herangezogen werden, die in dem beweglichen System angeordnet ist. Nachteilig daran ist jedoch, dass eine Batterie eine endliche Lebensdauer hat und darüber hinaus ein recht hohes Gewicht aufweisen kann.

Sollte der bewegliche Verbraucher ferner Informationen an ein stationäres, d.h. unbewegtes, System, oder ein anders bewegtes System übertragen, so muß zwischen dem beweglichen Verbraucher und dem stationären bzw. anders bewegten System eine zusätzliche Kommunikationsverbindung, z.B. eine Funkstrecke, aufgebaut werden. Nachteilig dabei ist, dass die Kommunikationsverbindung zusätzliche Kosten verursacht.

Handelt es sich bei dem beweglichen Verbraucher beispielsweise um einen Reifendrucksensor, so müssen die Druckmesswerte von dem in einem bewegten System angeordneten beweglichen Verbraucher zu einem bezüglich des bewegten Systems (Autoreifen) stationären Systems (Fahrzeug), übertragen werden. Zum Übertragen der Druckmesswerte können aktive Transponder eingesetzt werden, die über eine Funkstrecke durch einen Gummi-Stahl-Mantel des Reifens einen Messwert an ein Empfangsgerät (Lesegerät) außerhalb des Reifens übertragen, herangezogen werden. Dieser Ansatz wird von am Markt erhältlichen Systemen zur Messung eines Innendrucks eines Autoreifens verwendet. Neben den beiden bereits erwähnten unerwünschten Faktoren, nämlich der endlichen Batterielebensdauer sowie deren hohen Gewichts, kommuniziert der aktive Transponder mit dem Lesegerät über Funkwellen durch die Luft, wodurch eine Umgebung durch elektromagnetische Wechselfelder belastet wird. Darüber hinaus können die Funkwellen andere elektronische Systeme stören und zu deren Fehlfunktion führen. Dies ist insbesondere in sicherheitsrelevanten Aspekten, wie beispielsweise einer Bremssteuerung, ein entscheidender Nachteil. Mit einem steigenden Abstand zwischen dem aktiven Transponder und dem Lesegerät wird zum einen eine Sendeleistung erhöht, um die größere Reichweite zu überbrücken, so dass die elektromagnetischen Wechselfelder sich zunehmend störend auswirken. Darüber hinaus wird dadurch die Lebensdauer der Batterie verkürzt, da der aktive Transponder, der nun mit einer höheren Sendeleistung senden muß, dieselbe von der Batterie beziehen muß.

Die DE 101 42 273 A offenbart ein Verfahren zur berührungslosen Übertragung von Messdaten zwischen einer Messeinrichtung und einer Auswerteeinrichtung, wobei die Messeinrichtung an einem relativ zum Auswerteeinrichtung bewegbaren Gegenstand angebracht ist. Die Messdatenübertragung findet auf der Basis einer induktiven Kopplung zwischen einer Sendevorrichtung und einer Empfangsvorrichtung statt, wobei die Sendevorrichtung eine Sendespule und die Empfangseinrichtung eine Empfangsspule aufweist.

Die US-B1-6,591,671 offenbart ein Verfahren zum Überwachen von Zuständen eines pneumatischen Reifens, wobei die Messdaten von einer in dem Reifen angeordneten Antenne zu einer Antenne in dem Fahrzeug ausgesendet werden.

Die DE 198 02 773 A offenbart eine Vorrichtung und ein Verfahren zur drahtlosen Übertragung von Messwerten bei Fahrzeugen, wobei Messwerte auf der Basis einer induktiven Kopplung zwischen im Reifen und im Fahrzeug angeordneten Spulen übertragen werden.

Die DE 34 02 351 A befasst sich mit einer Einrichtung zur kontaktlosen Übertragung von Wechselspannungen zwischen zwei relativ zueinander um eine Achse drehbaren Maschinenteilen. Eine Primärspule eines ersten Spulenpaars und eine Sekundärspule eines zweiten Spulenpaars sind auf einem drehbaren Maschinenteil angeordnet. Eine Sekundärspule des ersten Spulenpaars und eine Primärspule des zweiten Spulenpaars sind auf einem stationären Maschinenteil derart angeordnet, dass die Spulen der jeweiligen Spulenpaare konzentrisch einander überlagert sind. Über das erste Spulenpaar werden Messdaten übermittelt, während über das zweite Spulenpaar Hilfsenergie übertragen wird.

Die Aufgabe der vorliegenden Erfindung besteht darin, ein effizientes Konzept zum Übertragen von Energie und/oder Informationen zwischen einer Quelle und einem dazu beweglichen Empfänger zu schaffen.

Diese Aufgabe wird durch eine Vorrichtung zum Übertragen von Energie und Informationen gemäß Anspruch 1 und ein Verfahren zum Übertragen von Energie und Informationen gemäß Anspruch 11 gelöst.

Der vorliegenden Erfindung liegt die Erkenntnis zugrunde, dass zum Übertragen von Energie und/oder Informationen zwischen zwei relativ zueinander beweglichen Systemen magnetische Wechselfelder herangezogen werden können. Werden die magnetischen Felder von einem stationären System erzeugt, so können sie beispielsweise mit Hilfe eines magnetisierbaren Kerns in eine Nähe des beweglichen Systems transportiert werden, wodurch Energie zum beweglichen System hin transportiert wird, ohne dass das bewegliche System mit dem stationären System verbunden sein muß. Durchdringt beispielsweise das von dem stationären System erzeugte (Wechsel-)Magnetfeld eine Querschnittsfläche einer Spule, die in dem beweglichen System angeordnet ist, so werden in der zweiten Spule Ströme induziert, so dass der Empfänger, der an die Spule angeschlossen ist, mit Energie versorgt werden kann.

Der Empfänger kann dabei ein Verbraucher sein, der keine eigene Energiequelle aufweist, sondern durch das Magnetfeld mit Energie versorgt wird. Alternativ kann der Empfänger auch eine eigene Energiequelle aufweisen, wobei dann das erfindungsgemäße Konzept verwendet werden kann, um lediglich Informationen zwischen Quelle und Empfänger sowie zwischen Empfänger und Quelle zu übertragen.

Das erfindungsgemäße Konzept kann dazu herabgezogen werden, Informationen von dem beweglichen System zu dem stationären System hin zu übertragen, da eine Änderung des beispielsweise Verbrauchsstroms durch das bezüglich des stationären Systems beweglichen Systems in eine Änderung einer zu liefernden Magnetfeldenergie resultiert, wobei diese Änderung von dem stationären System erfasst werden kann.

Analog können Informationen von dem stationären System zu dem beweglichen System hin übertragen werden. Wird beispielsweise ein durch die starre Spule fließender Strom moduliert, so resultiert dies in einer der Modulation entsprechenden Änderung des Magnetfeldes, die nun von dem beweglichen Empfänger erfasst werden kann, da die Änderung des Magnetfeldes eine entsprechende Änderung des in der zweiten Spule induzierten Stroms bewirkt.

Ein Vorteil der vorliegenden Erfindung liegt darin, dass der bewegliche Verbraucher mit Energie versorgt werden kann, ohne dass hierzu eine Batterie benötigt wird.-Zum einen wird dadurch eine Zuverlässigkeit der Energieversorgung erhöht, da keine Batterie ausfallen kann. Dadurch wird ebenfalls erreicht, dass der bewegliche Verbraucher ein geringeres Gewicht aufweist.

Ein weiterer Vorteil der vorliegenden Erfindung ist darin zu sehen, dass mit der erfindungsgemäßen Energieversorgungsstruktur auch eine Kommunikationsinfrastruktur geschaffen wird, so dass auf zusätzliche Sendeempfangsstrukturen verzichtet werden kann, was zu einer Senkung der Herstellungs- und Betriebskosten führt.

Ein weiterer Vorteil der vorliegenden Erfindung ist darin zu sehen, dass die Informationsübertragung über eine Änderung der geführten magnetischen Wechselfelder realisiert wird. Zum einen werden dadurch Freiraumfunkwellen vermieden, was zu einer Reduktion einer Störwahrscheinlichkeit innerhalb der Systeme führt. Darüber hinaus wird nun insgesamt eine geringere Energiemenge benötigt, um Informationen zu übertragen, da die bereits erwähnten Funkwellen nicht mehr erzeugt werden müssen. Da die Informationsübertragung ausschließlich über geführte Magnetfelder stattfindet, kann das erfindungsgemäße Konzept darüber hinaus generell dort eingesetzt werden, wo eine Freiraumfeldausbreitung aufgrund von Sicherheits- oder Gesundheitsbestimmungen nicht möglich ist, wie z.B. in Krankenhäusern, da eine Belastung der Umgebung durch elektromagnetische Wechselfelder geringer ist.

Ein weiterer Vorteil der vorliegenden Erfindung ist darin zu sehen, dass die Information ohne Bindung an bestimmte vorgegebene Frequenzen, wie dies beispielsweise bei Transpondern der Fall ist, übertragen werden können, so dass das erfindungsgemäße Konzept flexibel einsetzbar ist.

Die vorliegende Erfindung ist zur Energieübertragung und Informationsübertragung zwischen zwei zueinander beweglichen Partnern einsetzbar. Dabei kann ein Partner stationär und ein Partner bewegt sein. Alternativ können beide Partner unterschiedlich bewegt sein, so dass sie relativ zueinander bewegt bzw. beweglich sind.

Bevorzugte Ausführungsbeispiele der vorliegenden Erfindung werden nachfolgend Bezug nehmend auf die beiliegenden Zeichnungen näher erläutert. Es zeigen:
- Fig. 1: ein erstes Ausführungsbeispiel einer Vorrichtung zum Übertragen von Energie gemäß der vorliegenden Erfindung;
- Fig. 2: ein weiteres Ausführungsbeispiel einer Vorrichtung zum Übertragen von Energie gemäß der vorliegenden Erfindung;
- Fig. 3: ein weiteres Ausführungsbeispiel einer Vorrichtung zum Übertragen von Energie gemäß der vorliegenden Erfindung.

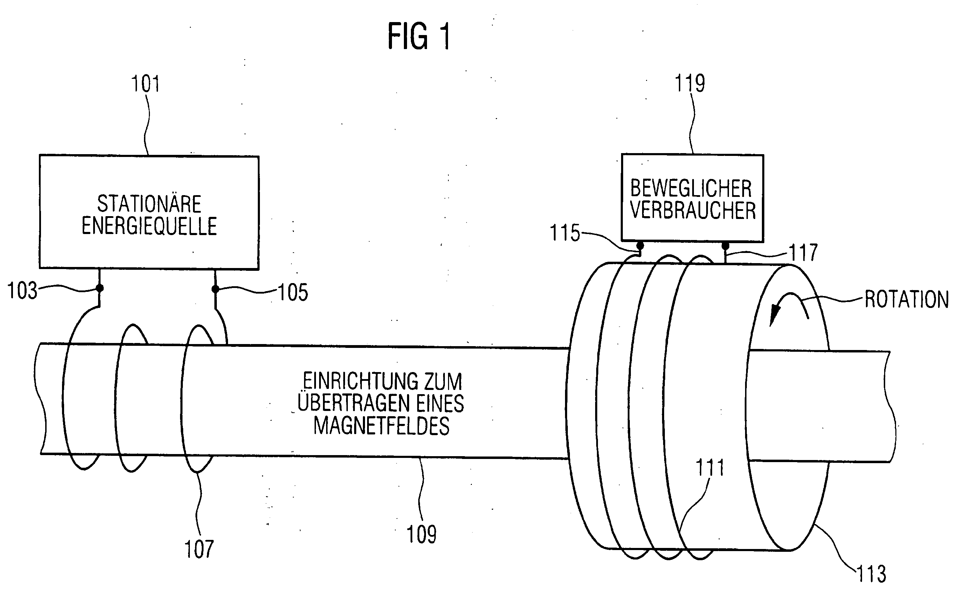

In Fig. 1 ist ein erstes Ausführungsbeispiel einer Vorrichtung zum Übertragen von Energie zwischen einer Energiequelle und einem relativ zur Energiequelle beweglichen Verbraucher dargestellt.

Die Vorrichtung umfaßt eine Energiequelle 101, die einen ersten Anschluss 103 und einen zweiten Anschluss 105 aufweist. Mit den Anschlüssen 103 und 105 ist eine erste Spule 107 gekoppelt. Darüber hinaus weist die in Fig. 1 dargestellte Vorrichtung eine Einrichtung 109 zum Übertragen eines Magnetfeldes, wobei die Einrichtung 109 eine längliche Ausdehnung aufweist. Dies bedeutet, dass eine axiale Ausdehnung der Einrichtung 109 größer als eine vertikale.

Die Einrichtung 109 zum Übertragen eines Magnetfeldes ist derart angeordnet, dass die Windungen der ersten (stationären) Spule 107 um einen Teil der Einrichtung 109 gewickelt sind. Mit anderen Worten ausgedrückt, durchsetzt die Einrichtung 109 zum Übertragen eines Magnetfeldes einen Teil eines Spulenquerschnitts der ersten Spule 107. Um die Einrichtung 109 zum Übertragen eines Magnetfeldes herum ist ferner eine bewegliche, zweite Spule 111 gewickelt, wobei die zweite Spule 111 von der ersten Spule 107 beabstandet ist. Die zweite Spule 111 ist in dem in Fig. 1 dargestellten Ausführungsbeispiel auf einem rotierenden Ring 113 angeordnet, der beispielsweise gemäß der durch den in Fig. 1 dargestellten Pfeil eingezeichneten Rotationsrichtung rotiert. Die zweite Spule 111 weist einen ersten Anschluss 115 und einen zweiten Anschluss 117 auf, wobei mit den Anschlüssen 115 und 117 ein beweglicher Verbraucher 119 gekoppelt ist.

Im folgenden wird die Funktionsweise der in Fig. 1 dargestellten Vorrichtung zum Übertragen von Energie erklärt.

Um an den beweglichen Verbraucher 119 Energie zu liefern, wird die erste Spule 107 über die Anschlüsse 103 und 105 von der Energiequelle 101 mit einem Wechselsignal, beispielsweise einem Wechselstrom oder einer Wechselspannung, angeregt, wodurch ein elektromagnetisches Wechselfeld erzeugt wird. Besteht die Einrichtung 109 zum Übertragen eines Magnetfeldes aus einem magnetisierbaren Material, so entsteht in der Einrichtung 109 zum Übertragen eines Magnetfeldes ein magnetischer Fluss, der das Magnetfeld charakterisiert. Die magnetischen Feldlinien durchdringen somit eine von der zweiten Spule 111 gebildete Spulenquerschnittsfläche, so dass in der zweiten Spule 111, die in dem in Fig. 1 dargestellten Ausführungsbeispiel um die Einrichtung 109 zum Übertragen eines Magnetfeldes herum rotiert, ein Wechselstrom induziert wird, der in den beweglichen Verbraucher 119 über die Anschlüsse 115 und 117 eingespeist werden kann.

In dem in Fig. 1 dargestellten Ausführungsbeispiel rotiert der bewegliche Verbraucher 119 um die Einrichtung 109 zum Übertragen eines Magnetfeldes. An dieser Stelle sei jedoch darauf hingewiesen, dass der bewegliche Verbraucher 119 sich ebenfalls lateral bewegen kann, d. h., dass der bewegliche Verbraucher 119 sich auch entlang einer Achse der Einrichtung 109 zum Übertragen eines Magnetfeldes bewegen kann. Darüber hinaus kann sich der bewegliche Verbraucher 119 senkrecht zu der Längsachse der Einrichtung 109 bewegen. Eine Anordnung des beweglichen Verbrauchers 119 sowie dessen Bewegung ist lediglich durch eine Ausdehnung der von der Einrichtung 109 zum Übertragen eines Magnetfeldes geführten Magnetfeldlinien bestimmt. Dies bedeutet, dass die zweite Spule 111 zumindest zu einem Teil von den magnetischen Feldlinien erfasst sein soll, damit z.B. ein Strom induziert wird.

In dem in Fig. 1 dargestellten Ausführungsbeispiel ist der bewegliche Verbraucher auf dem Rotationsring 113 angeordnet und rotiert somit relativ zu der Energiequelle 101 und relativ zu der Einrichtung 109 zum Übertragen eines Magnetfeldes. Gemäß einem weiteren Ausführungsbeispiel kann die Einrichtung 109 zum Übertragen eines Magnetfeldes selbst um eine Längsachse rotierbar sein und sich relativ zu der Energiequelle 101 bewegen. Sind die Windungen der ersten Spule 107 um die Einrichtung 109 herum gewickelt, wobei sie beispielsweise konzentrisch um die Längsachse gewickelt sind, so kann sich in der Einrichtung 109 dennoch ein Wechselmagnetfeld ausbilden, das zu einer Energieübertragung benötigt wird. Ist die zweite Spule 111 derart angeordnet, dass das Magnetfeld zumindest einen Teil deren Querschnittsfläche durchsetzt, so wird ein Strom induziert, der den beweglichen Verbraucher 119 speist. Die zweite Spule 111 kann um die Längsachse beispielsweise mit einer Winkelgeschwindigkeit rotieren, mit der die Einrichtung 109 rotiert. Denkbar ist es ebenfalls jedoch, dass die zweite Spule 111 um die Längsachse mit einer Winkelgeschwindigkeit rotiert, die sich von der Winkelgeschwindigkeit der Einrichtung 109 unterscheidet. Die zweite Spule 111 kann darüber hinaus fest mit der rotierenden Einrichtung 109 zum Übertragen eines Magnetfeldes verbunden sein, so dass sich ein bewegtes System bestehend aus der Einrichtung 109 sowie aus der Spule 111 und dem Verbraucher 119 ergibt, da sich relativ zu dem stationären System bestehend aus der Energiequelle 101 und der ersten Spule 107 bewegt.

Der bewegliche Verbraucher 119 kann beispielsweise ein Sensor sein, der eine auf die Rotation hinweisende Größe, wie beispielsweise eine Winkelgeschwindigkeit oder eine Winkelbeschleunigung, erfasst. Wird hier beispielsweise die Einrichtung 109 zum Übertragen eines Magnetfeldes um eine Achse angeordnet, und rotiert der bewegliche Verbraucher 119 um die Achse zusammen mit der Einrichtung 109 zum Übertragen eines Magnetfeldes, so kann der bewegliche Verbraucher 119 beispielsweise eine Winkelgeschwindigkeit oder auch eine Winkelbeschleunigung der Einrichtung 109 zum Übertragen eines Magnetfeldes erfassen. Handelt es sich bei der Einrichtung 109 beispielsweise um eine Achse eines Fahrzeugs, so kann der bewegliche Verbraucher 119 beispielsweise auf der Achse selbst, oder in einem Rad, das mit der Achse verbunden ist, angeordnet sein, um beispielsweise als ABS (ABS = Antiblockiersystem) Sensor eine Änderung einer Beschleunigung des Fahrzeugs zu erfassen.

Ist der bewegliche Verbraucher 119 als ein Sensor ausgebildet, so müssen Signale, die die erfasste Information beinhalten, zum stationären System hin übertragen'werden. Dies kann, wie es bereits erwähnt worden ist, durch eine Änderung bzw. durch eine Modulation der von dem beweglichen Verbraucher 119 aufgenommenen Energie realisiert werden.

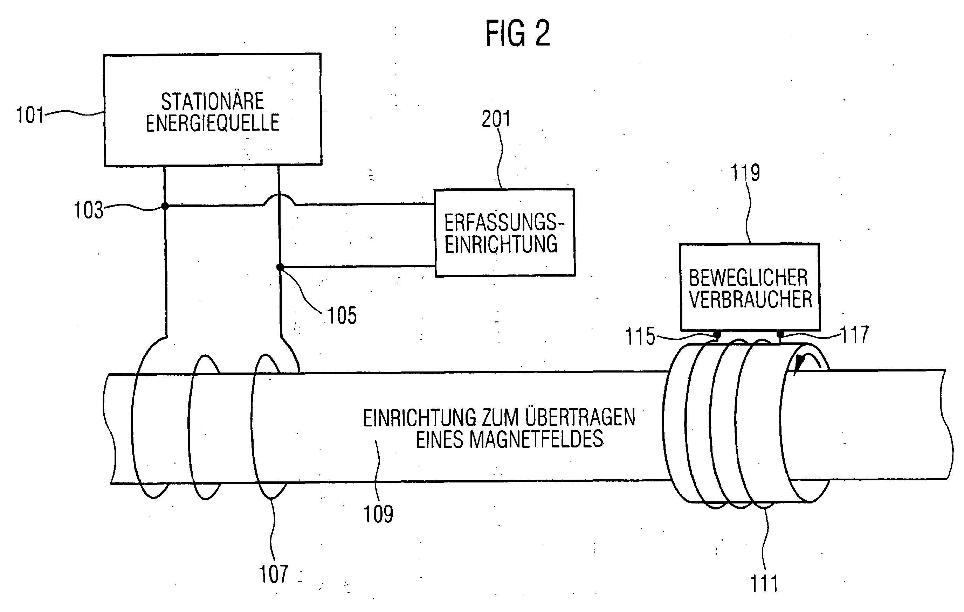

In Fig. 2 ist ein weiteres Ausführungsbeispiel einer Vorrichtung zum Übertragen von Energie zwischen einer Energiequelle und einem relativ zur Energiequelle beweglichen Verbraucher dargestellt.

Im Unterschied zu dem in Fig. 1 dargestellten Ausführungsbeispiel umfaßt die in Fig. 2 dargestellte Vorrichtung eine Erfassungseinrichtung 201, die zwischen die Anschlüsse 103 und 105 gekoppelt ist. Die Erfassungseinrichtung 201 ist somit parallel zu der Energiequelle 101 angeordnet und ist somit ebenfalls ein Teil des stationären, d. h. des unbewegten Systems.

Im folgenden wird das in Fig. 2 dargestellte Ausführungsbeispiel näher erläutert.

Überträgt der bewegliche Verbraucher 119 Informationen an das stationäre System durch eine Änderung einer Verbrauchsenergie, so führt dies, wie es bereits erwähnt worden ist, zu einer Änderung des in der Einrichtung 109 ausgebildeten Magnetfeldes. Der bewegliche Verbraucher 119 kann beispielsweise einen Verbrauchsstrom derart modulieren, dass eine damit einhergehende Änderung der von der Energiequelle 101 gelieferten Energiemenge erfasst werden kann. Da die Erfassungseinrichtung 201 mit der ersten Spule gekoppelt ist, kann sie derart ausgebildet sein, dass sie eine auf die von dem beweglichen Verbraucher 119 aufgenommene Verbrauchsenergie hinweisende Größe erfasst. Die Erfassungseinrichtung 201 kann beispielsweise derart ausgebildet sein, dass sie einen durch die erste Spule 107 fließenden Strom oder eine an der ersten Spule 107 anliegende Spannung als die auf die Verbrauchsenergie hinweisende Größe erfasst. Die Erfassungseinrichtung 201 kann beispielsweise ein Strom-, ein Spannungsmessgerät oder ein Leistungsmessgerät sein, mit dem die Verbrauchsenergie überwacht wird.

Um die von dem beweglichen Verbraucher 119 übertragene Information zu detektieren, kann die Erfassungseinrichtung 201 ferner eine Detektionseinrichtung aufweisen, die ausgebildet ist um aus der auf die Verbrauchsenergie hinweisenden Größe die von dem beweglichen Verbraucher übertragene Information zu detektieren. Da der bewegliche Verbraucher 119 die Information über eine Änderung von der Verbrauchsenergie, beispielsweise des Verbrauchsstroms, überträgt, kann die Detektionseinrichtung beispielsweise derart ausgebildet sein, dass sie die von dem beweglichen Verbraucher übertragene Information auf der Basis einer Bestimmung eine Änderung der Verbrauchsenergie innerhalb eines vorbestimmten Zeitintervalls bestimmt. Die Änderung der Verbrauchsenergie kann beispielsweise durch eine Mittelung über die innerhalb des vorbestimmten Zeitintervalls aufgenommene Energie erfolgen, wobei das vorbestimmte Zeitintervall derart gewählt ist, dass transiente Vorgänge nicht als übertragene Information interpretiert werden, was beispielsweise gesichert werden kann, wenn das vorbestimmte Zeitintervall größer als eine Millisekunde ist.

Die von dem beweglichen Verbraucher 119 an die Energiequelle 101 gelieferte Information, die von der Erfassungseinrichtung 201 erfasst wird, kann, wie es bereits beschrieben worden ist, über eine einfache Änderung der Verbrauchsenergie erfolgen, wobei einem vorbestimmten Wert eine Verbrauchsenergie eine vorbestimmte Informationseinheit beispielsweise in Form einer Zahl zugeordnet wird. Es ist jedoch ebenfalls denkbar, dass der bewegliche Verbraucher 119 die Information über eine Änderung der Verbrauchsenergie innerhalb eines Zeitfensters, das beispielsweise gleich dem vorbestimmten Zeitintervall ist, codiert. In diesem Fall kann der Änderung der Verbrauchsenergie beispielsweise ein Bit zugeordnet werden, so dass die zu übertragende Information digital codiert werden kann.

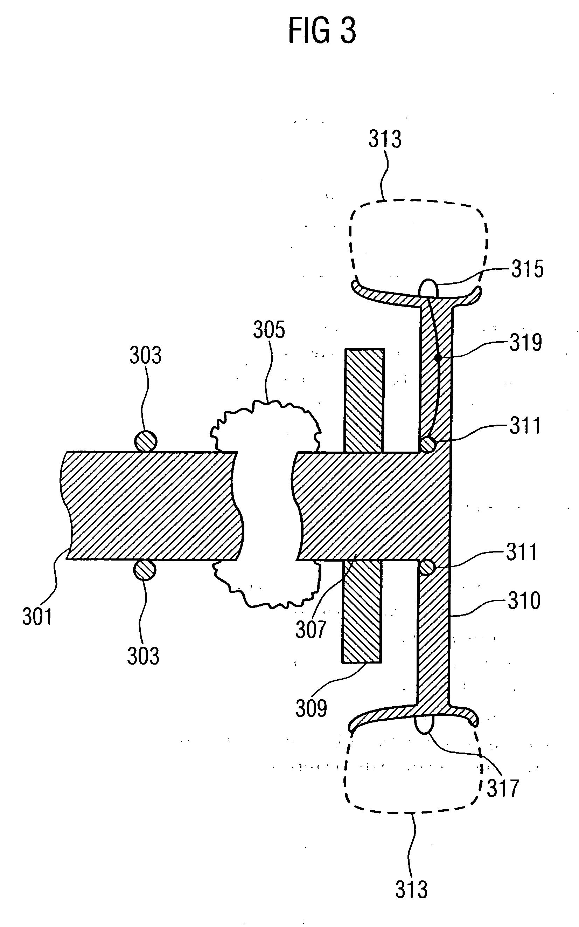

Fig. 3 zeigt ein weiteres Ausführungsbeispiel einer erfindungsgemäßen Vorrichtung zum Übertragen von Energie zwischen einem stationären und einem beweglichen System in einer Querschnittsdarstellung, wobei das erfindungsgemäße Konzept an einem Beispiel einer Reifendruckmessung in einem Autoreifen verdeutlicht wird.

Die in Fig. 3 gezeigte Vorrichtung umfaßt eine Achse 301. Eine starre Spule 303 ist koaxial um die Achse 301 gewickelt. Über ein Lager 305, beispielsweise ein Kugellager oder ein Walzenlager, ist eine rotierende Welle 307 (rotierendes Teil) mit der Achse 301 gekoppelt. Die rotierende Welle 307 weist eine Bremsscheibe 309 auf, die mit derselben verbunden ist. Mit der rotierenden Welle 307 ist ferner eine Felge 310 fest verbunden. In der Felge 310 ist ferner eine zweite Spule 311 derart angeordnet, dass eine Normale der von den Spulenwindungen gebildeten Querschnittsfläche parallel zu der Längsachse der rotierenden Welle 307 ist. Auf der Felge 310 ist ein Reifen 313 angebracht.

Auf der Felge und in dem Bereich, in dem der Reifen 313 angeordnet ist, ist ein beweglicher Verbraucher 315 angeordnet, der gemäß dem in Fig. 3 dargestellten Ausführungsbeispiel ein Reifendrucksensor oder genauer ein Reifeninnendrucksensor ist. Um ein Gewicht des Reifendrucksensors 315 auszugleichen ist auf der entgegengesetzten Seite der Felge ein Gegengewicht 317 angeordnet. Der Reifendrucksensor 315 ist mit der rotierenden Spule 311 über eine elektrische Verbindung 319 verbunden.

Im folgenden wird die Funktionsweise des in Fig. 3 dargestellten Ausführungsbeispiels erläutert.

In dem in Fig. 3 dargestellten Ausführungsbeispiel bestehen die Achse 301, das Lager 305 sowie das rotierende Teil 307 bevorzugt aus einem magnetisierbaren Material und bilden ferner eine Einrichtung zum Übertragen von Energie. Wird in die Spule 303 mit Hilfe einer in Fig. 3 nicht eingezeichneten Energiequelle ein Wechselstrom eingespeist, so bildet sich in der Achse 301 ein Wechselmagnetfeld aus, das über das Lager 305 zur rotierenden Spule 311 hin übertragen werden kann. Da der durch die starre Spule fließende Wechselstrom ein magnetisches Wechselfeld erzeugt, das durch die Achse geführt wird, wird in der rotierenden Spule 311 eine Wechselspannung induziert, da das Wechselfeld einen Teil der durch die Windungen der rotierenden Spule 311 gebildeten Querschnittsfläche durchsetzt. Dadurch kann der Reifendrucksensor 315 (Messgerät) mit Energie versorgt werden. Gleichzeitig kann, wie es bereits erwähnt worden ist, durch eine Modulation des Stroms durch die starre Spule 303 oder in der rotierenden Spule 311 Informationen zwischen den an der jeweiligen Spule angeschlossenen Geräten - eine in Fig. 3 nicht eingezeichnete Erfassungseinrichtung und der Reifendrucksensor 315 - übertragen werden. Über diesen Informationsweg kann beispielsweise ein Protokoll übertragen werden, das z. B. Anweisungen oder Messwerte und im starren System zu dem rotierenden System oder umgekehrt definieren. In dem rotierenden System kann das Protokoll beispielsweise von einer in Fig. 3 nicht eingezeichneten Einrichtung zum Prozessieren ausgewertet werden, wobei die Einrichtung zum Prozessieren in der Radfelge untergebracht werden kann. Analog kann die von dem Reifendrucksensor 315 zum starren System hin übertragene Information mit Hilfe einer weiteren Einrichtung zum Prozessieren, die beispielsweise Bestandteil der in Fig. 3 nicht eingezeichneten Detektionseinrichtung sein kann, verarbeitet werden.

Wie es bereits erwähnt worden ist, kann der Reifendrucksensor 315 über eine Änderung des Verbrauchsstroms Informationen an das stationäre System übertragen. Dabei bewirkt eine Änderung des in der rotierenden Spule 311 induzierten Stromes eine Änderung des Stromes in der starren Spule 303. Zum Auswerten der Stromänderung durch die starre Spule kann die bereits erwähnte Erfassungseinrichtung ein Lesegerät aufweisen, das die Veränderung des Stroms durch die starre Spule erfasst und so die Informationen über den gemessenen Reifeninnendruck erhält.

Im Zusammenhang mit dem in Fig. 3 dargestellten Ausführungsbeispiel wurde das erfindungsgemäße Verfahren zum Übertragen von Energie und Information zwischen ruhenden und rotierenden System mittels magnetischer Wechselfelder exemplarisch am Beispiel einer Übertragung eines Ergebnisses einer Messung aus einem Innenraum eines pneumatischen Reifens an einen nicht-rotierenden Teil eines Fahrzeugs betrachtet. An dieser Stelle sei jedoch ausdrücklich darauf hingewiesen, dass das erfindungsgemäße Konzept zur Energieversorgung von beliebigen beweglichen Verbrauchern eingesetzt werden kann.

Darüber hinaus ist das erfindungsgemäße Konzept überall dort anwendbar, wo eine Energieübertragung zwischen einem starren Teil und einem rotierenden Teil bzw. zwischen Teilen, die sich mit unterschiedlichen Geschwindigkeiten bewegen, sowie eine Datenübertragung zwischen den beiden Teilen stattfindet.

## Patentansprüche

1. Vorrichtung zum Übertragen von Energie und Informationen zwischen einer Quelle und einem relativ zur Quelle beweglichen Empfänger mit folgenden Merkmalen:
einer mit der Quelle (101) gekoppelten ersten Spule (107; 303);
einer mit dem Empfänger (119; 315) gekoppelten relativ zur ersten Spule (107; 303) um eine Rotationsachse rotierbaren zweiten Spule (111; 311); und
einer Einrichtung (109; 301, 305, 307) aus einem magnetisierbaren Material zum Übertragen eines durch die erste Spule (107; 303) erzeugten Magnetfeldes zu der zweiten Spule (111; 311) zum Induzieren eines Stroms in der zweiten Spule (111; 311);
° wobei die Rotationsachse der rotierbaren zweiten Spule (111; 311) mit einer Längsachse der Einrichtung (109; 301, 305, 307) zum Übertragen zusammenfällt,
wobei sich die Einrichtung (109; 301, 305, 307) aus einem magnetisierbaren Material durch die erste und die zweite Spule erstreckt,
und wobei die Einrichtung zum Übertragen des Magnetfelds eine Achse (301), eine relativ dazu rotierbare Welle (307) und ein Lager (305), über das die Welle mit der Achse gekoppelt ist, aufweist.

2. Vorrichtung gemäß Anspruch 1, bei der die Quelle eine Energiequelle ist und bei der der Empfänger ein Verbraucher ist.

3. Vorrichtung gemäß Anspruch 2, die ferner eine mit der ersten Spule (107; 303) gekoppelte Erfassungseinrichtung (201) zum Erfassen einer auf die von dem Verbraucher (119) aufgenommene Verbrauchsenergie hinweisenden Größe aufweist, wobei der Verbraucher (119; 315) ausgebildet ist, um durch eine Änderung der Verbrauchsenergie Informationen an die Erfassungseinrichtung (201) zu übertragen.

4. Vorrichtung gemäß Anspruch 3, wobei die Erfassungseinrichtung (201) ausgebildet ist, um einen durch die erste Spule (107; 303) fließenden Strom oder eine an der ersten Spule (107; 303) anliegende Spannung als die auf die Verbrauchsenergie hinweisende Größe zu erfassen.

5. Vorrichtung gemäß Anspruch 3 oder 4, wobei die Erfassungseinrichtung (201) eine Detektionseinrichtung aufweist, die ausgebildet ist, um aus der auf die Verbrauchsenergie hinweisenden Größe die von dem Verbraucher (119) übertragene Information zu detektieren.

6. Vorrichtung gemäß einem der Ansprüche 1 bis 5, bei der die Einrichtung zum Übertragen des Magnetfeldes (109; 301, 305, 307) um eine Längsachse rotierbar ist, wobei die erste Spule (107; 303) um die Längsachse herum angeordnet ist, wobei die zweite Spule (111; 311) um die Längsachse rotierbar ist.

7. Vorrichtung gemäß einem der Ansprüche 1 bis 6, bei der die Einrichtung (109; 301, 305, 307) zum Übertragen eines Magnetfeldes eine Achse und eine um eine Längsachse rotierbare Welle aufweist, mit der ein Rad, an dem die zweite Spule angebracht ist, verbunden ist, wobei das Rad einen Reifen (313) aufweist, und wobei der Empfänger (119; 315) mit dem Rad verbunden ist, und ausgebildet ist, um einen Reifeninnendruck zu messen.

8. Vorrichtung gemäß einem der Ansprüche 1 bis 6, bei der die Einrichtung (109; 301, 305, 307) zum Übertragen des Magnetfeldes um eine Achse rotierbar ist, und bei der der Empfänger (119; 315) um die Achse rotiert, wobei der Empfänger (119; 315) ausgebildet ist, um eine auf die Rotation der Einrichtung (109; 301, 305, 307) zum Übertragen eines Magnetfeldes hinweisende Größe zu erfassen.

9. Vorrichtung gemäß Anspruch 8, bei der der Empfänger (119; 315) ausgebildet ist, um eine Winkelgeschwindigkeit oder um eine Winkelbeschleunigung als die auf die Rotation hinweisende Größe zu messen.

10. Vorrichtung gemäß einem der Ansprüche 1 bis 9, die ferner eine Einrichtung zum Modulieren eines in die erste Spule (107; 303) eingespeisten Wechselstroms aufweist, um Informationen zu dem Empfänger zu übertragen.

11. Verfahren zum Übertragen von Energie und Informationen zwischen einer Quelle, die mit einer Spule gekoppelt ist, und einem relativ zur Quelle beweglichen Empfänger, der mit einer relativ zur ersten Spule beweglichen, um eine Rotationsachse rotierbaren zweiten Spule gekoppelt ist, mit folgenden Schritten:
Einspeisen eines Wechselstroms von der Quelle in die erste Spule zum Erzeugen eines Magnetfeldes;
Übertragen des Magnetfeldes zu der zweiten Spule unter Verwendung einer Einrichtung zum Übertragen eines Magnetfelds aus einem magnetisierbaren Material, die eine Längsachse aufweist, zum Induzieren eines Stroms in der zweiten Spule durch das Magnetfeld, wobei die Rotationsachse der zweiten Spule mit der Längsachse zusammenfällt, wobei sich die Einrichtung aus einem magnetisierbaren Material durch die erste und die zweite Spule erstreckt, und wobei die Einrichtung zum Übertragen des Magnetfelds eine Achse (301), eine relativ dazu rotierbare Welle (307) und ein Lager (305), über das die Welle mit der Achse gekoppelt ist, aufweist;
Übertragen des in der zweiten Spule induzierten Stroms an den Empfänger.

12. Verfahren gemäß Anspruch 11, das ferner einen Schritt eines Modulierens des Wechselstroms zum Übertragen von Informationen zum Empfänger aufweist.

13. Verfahren gemäß Anspruch 11 oder 12 ferner zum Übertragen von Informationen von dem Empfänger zu der Quelle, das ferner die folgenden Schritte aufweist:
Entnehmen von Energie aus dem in der zweiten Spule induzierten Strom entsprechend zu übertragender Information; und
Erfassen einer auf die entnommene Energie hinweisenden Größe an der ersten Spule zum Erhalten von Informationen.

14. Verfahren gemäß einem der Ansprüche 11 bis 13, bei dem die Quelle eine Energiequelle ist und bei dem der Empfänger ein Verbraucher ist.

## Claims

1. Apparatus for transmitting energy and information between a source and a receiver movable relative to the source, comprising:
a first coil (107; 303) coupled to the source (101);
a second coil (111; 311) coupled to the receiver (119; 315) and rotatable relative to the first coil (107; 303) about an axis of rotation; and
means (109; 301, 305, 307) made of a magnetizable material for transmitting a magnetic field generated by the first coil (107; 303) to the second coil (111; 311) for inducing a current in the second coil (111, 311).
wherein the axis of rotation of the rotatable second coil (111; 311) coincides with a longitudinal axis of the means (109; 301, 305, 307) for transmitting,
wherein the means (109; 301, 305, 307) made of a magnetizable material extends through the first and the second coils,
and wherein the means for transmitting the magnetic field comprises an axle (301), a shaft (307) rotatable relative to the same, and a bearing (305) via which the shaft is coupled to the axle.

2. Apparatus of claim 1, wherein the source is an energy source and wherein the receiver is a consumer.

3. Apparatus of claim 2, further comprising sensing means (201) coupled to the first coil (107; 303) for sensing a quantity indicative of the consumption energy taken up by the consumer (119), wherein the consumer (119; 315) is formed to transmit information to the sensing means (201) by alteration of the consumption energy.

4. Apparatus of claim 3, wherein the sensing means (201) is formed to sense current flowing through the first coil (107; 303) or voltage present at the first coil (107; 303) as the quantity indicative of the consumption energy.

5. Apparatus of claim 3 or 4, wherein the sensing means (201) comprises detection means formed to detect the information transmitted from the consumer (119) from the quantity indicative of the consumption energy.

6. Apparatus of one of claims 1 to 5, wherein the means for transmitting the magnetic field (109; 301, 305, 307) is rotatable about a longitudinal axis, wherein the first coil (107; 303) is arranged around the longitudinal axis, wherein the second coil (111; 311) is rotatable about the longitudinal axis.

7. Apparatus of one of claims 1 to 6, wherein the means (109; 301, 305, 307) for transmitting a magnetic field comprises an axle and a shaft rotatable about a longitudinal axis to which a wheel, at which the second coil is attached, is connected, wherein the wheel comprises a tire (313), and wherein the receiver (119; 315) is connected to the wheel and formed to measure an internal tire pressure.

8. Apparatus of one of claims 1 to 6, wherein the means (109; 301, 305, 307) for transmitting the magnetic field is rotatable about an axis, and wherein the receiver (119; 315) rotates about the axis, wherein the receiver (119; 315) is formed to sense a quantity indicative of the rotation of means (109; 301, 305, 307) for transmitting a magnetic field.

9. Apparatus of claim 8, wherein the receiver (119; 315) is formed to measure angular velocity or angular acceleration as the quantity indicative of the rotation.

10. Apparatus of one of claims 1 to 9, further comprising means for modulating alternating current fed to the first coil (107; 303), in order to transmit information to the receiver.

11. Method of transmitting energy and information between a source coupled to a coil and a receiver movable relative to the source and coupled to a second coil movable relative to the first coil and rotatable about an axis of rotation, comprising the steps of:
feeding alternating current from the source to the first coil for generating a magnetic field;
transmitting the magnetic field to the second coil, using means for transmitting a magnetic field made of a magnetizable material, comprising a longitudinal axis for inducing current in the second coil through the magnetic field, wherein the axis of rotation of the second coil coincides with the longitudinal axis, wherein the means made of a magnetizable material extends through the first and second coils, and wherein the means for transmitting the magnetic field comprises an axle (301), a shaft (307) rotatable relative to the same, and a bearing (305) via which the shaft is coupled to the axle;
transmitting the current induced in the second coil to the receiver.

12. Method of claim 11, further comprising a step of modulating the alternating current for transmitting information to the receiver.

13. Method of claim 11 or 12, further for transmitting information from the receiver to the source, further comprising the steps of:
taking out energy from the current induced in the second coil corresponding to information to be transmitted; and
sensing, at the first coil, a quantity indicative of the energy taken out for obtaining information.

14. Method of one of claims 11 to 13, wherein the source is an energy source, and wherein the receiver is a consumer.

## Revendications

1. Dispositif pour transmettre de l'énergie et des informations entre une source et un récepteur mobile par rapport à la source, aux caractéristiques suivantes:
une première bobine (107; 303) couplée à la source (101);
une deuxième bobine (111; 311) couplée au récepteur (119; 315) et pouvant tourner, autour d'un axe de rotation, par rapport à la première bobine (107; 303); et
un moyen (109; 301, 305, 307) réalisé en un matériau aimantable, destiné à transmettre à la deuxième bobine (111; 311) un champ magnétique généré par la première bobine (107; 303), pour induire un courant dans la deuxième bobine (111; 311);
l'axe de rotation de la deuxième bobine pouvant tourner (111; 311) coïncidant avec un axe longitudinal du moyen (109; 301, 305, 307) pour transmettre,
le moyen (109; 301, 305, 307) en matériau aimantable s'étendant à travers la première et la deuxième bobine,
et le dispositif pour transmettre le champ magnétique présentant un axe (301), un arbre (307) pouvant tourner par rapport à ce dernier, et un roulement (305) par l'intermédiaire duquel l'arbre est couplé à l'axe.

2. Dispositif selon la revendication 1, dans lequel la source est une source d'énergie et dans lequel le récepteur est un consommateur.

3. Dispositif selon la revendication 2, présentant, par ailleurs, un moyen de saisie (201), couplé à la première bobine (107; 303), destiné à capter une grandeur indiquant une énergie consommée par le consommateur (119), le consommateur (119; 315) étant réalisé de manière à transmettre des informations au moyen de saisie (201) par une modification de l'énergie consommée.

4. Dispositif selon la revendication 3, dans lequel le moyen de saisie (201) est réalisé de manière à capter, comme grandeur indiquant l'énergie consommée, un courant circulant à travers la première bobine (107; 303) ou une tension présente à la première bobine (107; 303).

5. Dispositif selon la revendication 3 ou 4, dans lequel le moyen de saisie (201) présente un moyen de détection qui est réalisé de manière à détecter, à partir de la grandeur indiquant l'énergie consommée, l'information transmise par le consommateur (119).

6. Dispositif selon l'une des revendications 1 à 5, dans lequel le moyen pour transmettre le champ magnétique (109; 301, 305, 307) peut tourner autour d'un axe longitudinal, la première bobine (107; 303) étant disposée autour de l'axe longitudinal, la deuxième bobine (111; 311) pouvant tourner autour de l'axe longitudinal.

7. Dispositif selon l'une des revendications 1 à 6, dans lequel le moyen (109; 301, 305, 307) pour transmettre un champ magnétique présente un axe et un arbre, pouvant tourner autour d'un axe longitudinal, auquel est reliée une roue sur laquelle est placée la deuxième bobine, la roue présentant un pneu (313), et le récepteur (119; 315) étant relié à la roue et étant réalisé de manière à mesurer une pression intérieure du pneu.

8. Dispositif selon l'une des revendications 1 à 6, dans lequel le moyen (109; 301, 305, 307) pour transmettre un champ magnétique peut tourner autour d'un axe, et dans lequel le récepteur (119; 315) tourne autour de l'axe, le récepteur (119; 315) étant réalisé de manière à capter une grandeur indiquant la rotation du moyen (109; 301, 305, 307) pour transmettre un champ magnétique.

9. Dispositif selon la revendication 8, dans lequel le récepteur (119; 315) est réalisé de manière à mesurer, comme grandeur indiquant la rotation, une vitesse angulaire ou une accélération angulaire.

10. Dispositif selon l'une des revendications 1 à 9, présentant, par ailleurs, un moyen pour moduler un courant alternatif alimenté vers la première bobine (107; 303), pour transmettre des informations au récepteur.

11. Procédé pour transmettre de l'énergie et des informations entre une source qui est couplée à une bobine et un récepteur mobile par rapport à la source qui est couplé à une deuxième bobine mobile par rapport à la première bobine et pouvant tourner autour d'un axe de rotation, aux étapes suivantes consistant à:
alimenter un courant alternatif de la source vers la première bobine, pour générer un champ magnétique;
transmettre le champ magnétique à la deuxième bobine à l'aide d'un moyen pour transmettre un champ magnétique à partir d'un matériau aimantable présentant un axe longitudinal, pour induire un courant dans la deuxième bobine par le champ magnétique, l'axe de rotation de la deuxième bobine coïncidant avec l'axe longitudinal, le moyen en matériau aimantable s'étendant à travers la première et la deuxième bobine, et le moyen pour transmettre le champ magnétique présentant un axe (301), un arbre (307) pouvant tourner par rapport à ce dernier, et un roulement (305) par l'intermédiaire duquel l'arbre est couplé à l'axe;
transmettre au récepteur le courant induit dans la deuxième bobine.

12. Procédé selon la revendication 11, présentant, par ailleurs, une étape consistant à moduler le courant alternatif, pour transmettre des informations au récepteur.

13. Procédé selon la revendication 11 ou 12, par ailleurs pour transmettre des informations du récepteur à la source, présentant, par ailleurs les étapes suivantes consistant à:
prélever de l'énergie du courant induit dans la deuxième bobine selon l'information à transmettre; et
capter à la première bobine une grandeur indiquant l'énergie prélevée, pour obtenir des informations.

14. Procédé selon l'une des revendications 11 à 13, dans lequel la source est une source d'énergie et dans lequel le récepteur est un consommateur.
